# FASCICULE DE BREVET EUROPEEN

(11) **EP 2 465 731 B1**
(45) Date de publication et mention de la délivrance du brevet: **10.07.2013**
(21) Numéro de dépôt: 11193567.2
(22) Date de dépôt: 14.12.2011
(51) Int. Cl.: B60R 5/04

(54) **Dispositif de montage d'une tablette de recouvrement d'un compartiment à bagages de véhicule automobile**
Vorrichtung zur Montage eine Laderaumabdeckung eines PKW
Device for mounting a car luggage compartment covering.

(30) Priorité: 14.12.2010 FR 1004884
(43) Date de publication de la demande: 20.06.2012
(73) Titulaire: Centre d'Etude et de Recherche pour l'Automobile (CERA), 51100 Reims (FR)
(72) Inventeur: Ayad, Mustapha, 51100 Reims (FR); Palloteau, Christophe, 51220 Villers Franqueux (FR)
(74) Mandataire: Sayettat, Julien Christian

(56) Documents cités:
- EP-A1- 1 741 601
- WO-A1-2004/074044
- DE-A1-102009 058 570

## Description

L'invention concerne un dispositif de montage d'une tablette de recouvrement d'un compartiment à bagages de véhicule automobile, une tablette comprenant un tel dispositif et un ensemble de montage comprenant un tel dispositif.

Il est connu de réaliser un dispositif de montage d'une tablette de recouvrement d'un compartiment à bagages de véhicule automobile, ledit dispositif comprenant :
- un rebord de tablette, ledit rebord comprenant une face externe et une face interne,
- une pièce de fixation comprenant une plaque pourvue d'un moyen d'emboitement destiné à coopérer avec un moyen réciproque issu dudit compartiment, lesdits moyens étant agencés de sorte que ladite tablette puisse être montée en rotation par rapport audit compartiment, ladite plaque étant fixée contre ladite face externe.

L'association de la pièce de fixation à la tablette peut notamment être faite, comme décrit dans le document EP-1 741 601, par ajout d'une contre plaque disposée contre la face interne du rebord, ladite plaque comprenant des saillies s'enfonçant dans les orifices prévus dans ladite contre plaque, lesdits saillies et orifices étant agencés pour s'emboîter l'un dans l'autre, de manière à fixer lesdites plaque et contre plaque par emboîtement, le rebord de tablette se trouvant pris en sandwich entre les deux.

Dans les réalisations décrites dans ce document, il est possible à l'utilisateur, par une action malencontreuse, de réaliser un déboîtement des plaques et contre plaque par simple appui sur l'extrémité libre des saillies, ce qui est préjudiciable en raison du caractère définitif attendu de l'emboîtement.

L'invention a pour but de pallier cet inconvénient.

A cet effet, et selon un premier aspect, l'invention propose un dispositif de montage d'une tablette de recouvrement d'un compartiment à bagages de véhicule automobile, ledit dispositif comprenant :
- un rebord de tablette, ledit rebord comprenant une face externe et une face interne,
- une pièce de fixation comprenant une plaque pourvue d'un moyen d'emboitement destiné à coopérer avec un moyen réciproque issu dudit compartiment, lesdits moyens étant agencés de sorte que ladite tablette puisse être montée en rotation par rapport audit compartiment, ladite plaque étant fixée contre ladite face externe,
ladite plaque étant pourvue d'au moins un doigt de fixation, ledit doigt traversant un orifice prévu dans ledit rebord, ledit dispositif comprenant en outre un capuchon d'arrimage, ledit capuchon étant emboité sur ledit doigt en étant plaqué contre ladite face interne.

Dans cette description, les termes de positionnement dans l'espace (bas, transversal, longitudinal, latéral, avant,...) sont pris en référence au dispositif disposé dans le véhicule.

Avec l'agencement proposé, il est impossible à l'utilisateur de déboîter le doigt du capuchon par appui sur l'extrémité libre dudit doigt, cette dernière étant inaccessible du fait de la présence du capuchon.

Un tel déboîtement ne serait possible que par enserrement du capuchon, qui n'offre qu'une faible prise, et traction exercée sur ce dernier, ce qui s'avère très malaisé.

De ce fait, un déboîtement accidentel est très improbable puisque requérant une manoeuvre intentionnelle délicate de la part de l'utilisateur.

Selon d'autres aspects, l'invention propose une tablette et un ensemble de montage comprenant un tel dispositif.

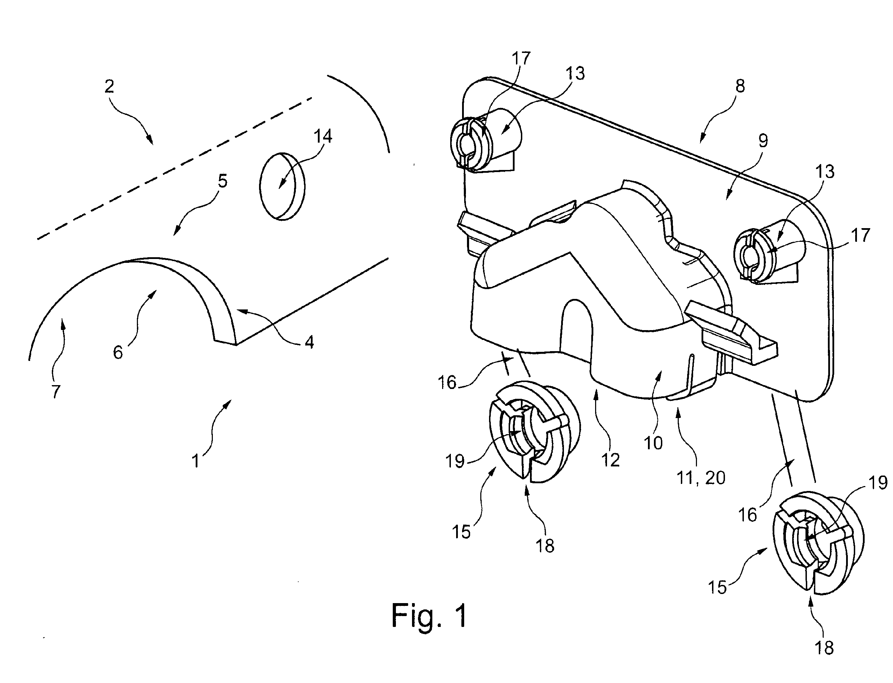

D'autres particularités et avantages de l'invention apparaîtront dans la description qui suit, faite en référence à la figure jointe qui est une vue schématique partielle en perspective éclatée d'un dispositif selon une réalisation, la pièce de fixation n'étant pas encore associée au rebord de tablette.

En référence à la figure, on décrit un dispositif 1 de montage d'une tablette 2 de recouvrement d'un compartiment à bagages de véhicule automobile, ledit dispositif comprenant :
- un rebord 4 de tablette - notamment latéral et plongeant vers le bas -, ledit rebord comprenant une face externe 5 et une face interne 6,
- une pièce 8 de fixation comprenant une plaque 9 pourvue d'un moyen d'emboitement 20 destiné à coopérer avec un moyen réciproque issu dudit compartiment, lesdits moyens étant agencés de sorte que ladite tablette puisse être montée en rotation par rapport audit compartiment, ladite plaque étant fixée contre ladite face externe,
ladite plaque étant pourvue d'au moins un doigt 13 de fixation, ledit doigt traversant un orifice 14 prévu dans ledit rebord, ledit dispositif comprenant en outre un capuchon 15 d'arrimage, ledit capuchon étant emboité sur ledit doigt en étant plaqué contre ladite face interne.

Selon la réalisation représentée, la pièce 8 est à base de matériau plastique moulé, le capuchon 15 étant moulé d'une pièce avec la plaque 9 par l'intermédiaire d'une languette 16 déformable, ce qui limite le nombre de composants et facilite l'opération de montage de la pièce 8 sur la tablette 2.

Selon la réalisation représentée, la plaque 9 comprend deux doigts 13 de fixation disposés de part et d'autre du moyen d'emboitement 20, deux capuchons 15 correspondants étant emboîtés sur lesdits doigts.

Selon la réalisation représentée, au moins un doigt 13 comprend une extrémité libre pourvue d'une protubérance 17, le capuchon 15 correspondant comprenant au moins une fente 18 - trois dans la réalisation représentée - permettant sa déformation élastique temporaire, ledit capuchon comprenant en outre au moins une butée interne 19 coopérant avec ladite protubérance pour réaliser l'emboîtement dudit doigt dans ledit capuchon.

On décrit à présent une tablette 2 de recouvrement d'un compartiment à bagages de véhicule automobile, ladite tablette comprenant deux dispositifs 1, lesdits dispositifs étant respectivement disposés selon les coins avant de ladite tablette de façon à permettre un actionnement en rotation de ladite tablette selon son bord avant pour faciliter l'accès aux bagages.

On décrit enfin un ensemble de montage d'une tablette 2 de recouvrement d'un compartiment à bagages de véhicule automobile, ledit ensemble comprenant un dispositif 1 et un moyen réciproque, ledit ensemble présentant les caractéristiques suivantes :
- ledit moyen réciproque est sous forme d'un axe, non représenté, issu dudit compartiment, ledit axe étant notamment intégré à une garniture latérale dudit compartiment,
- le moyen d'emboitement 20 est sous forme d'un logement 11 prévu sur la plaque 9, ledit logement étant agencé pour recevoir ledit axe, de sorte que ladite tablette puisse être montée en rotation autour dudit axe, ledit logement présentant une ouverture 12 - notamment orientée vers le bas -, ladite ouverture étant agrandissable par déformation élastique depuis une configuration rétractée vers une configuration agrandie et étant dimensionnée de manière à permettre une introduction dudit axe dans ledit logement par déformation de ladite ouverture et à maintenir ledit axe dans ledit logement après rappel élastique de ladite ouverture en configuration rétractée.

Selon la réalisation représentée, le rebord 4 est pourvu d'une encoche 7, le logement 11 étant disposé dans un renfoncement 10 de la plaque 9, ladite encoche présentant une géométrie complémentaire à celle dudit renfoncement de sorte que ledit renfoncement soit inséré dans ladite encoche et en contact avec elle.

De la sorte, le blocage de la pièce 8 en translation longitudinale est accentué, ce qui renforce la tenue de ladite pièce sur la tablette 2.

## Revendications

1. Dispositif (1) de montage d'une tablette (2) de recouvrement d'un compartiment à bagages de véhicule automobile, ledit dispositif comprenant :
• un rebord (4) de tablette, ledit rebord comprenant une face externe (5) et une face interne (6),
• une pièce (8) de fixation comprenant une plaque (9) pourvue d'un moyen d'emboitement (20) destiné à coopérer avec un moyen réciproque issu dudit compartiment, lesdits moyens étant agencés de sorte que ladite tablette puisse être montée en rotation par rapport audit compartiment, ladite plaque étant fixée contre ladite face externe,
ledit dispositif étant **caractérisé en ce que** ladite plaque est pourvue d'au moins un doigt (13) de fixation, ledit doigt traversant un orifice (14) prévu dans ledit rebord, ledit dispositif comprenant en outre un capuchon (15) d'arrimage, ledit capuchon étant emboité sur ledit doigt en étant plaqué contre ladite face interne.

2. Dispositif selon la revendication 1, **caractérisé en ce que** la pièce (8) est à base de matériau plastique moulé, le capuchon (15) étant moulé d'une pièce avec la plaque (9) par l'intermédiaire d'une languette (16) déformable.

3. Dispositif selon la revendication 1 ou 2, **caractérisé en ce que** la plaque (9) comprend deux doigts (13) de fixation disposés de part et d'autre du moyen d'emboitement (20), deux capuchons (15) correspondants étant emboîtés sur lesdits doigts.

4. Dispositif selon l'une quelconque des revendications 1 à 3, **caractérisé en ce qu'**au moins un doigt (13) comprend une extrémité libre pourvue d'une protubérance (17), le capuchon (15) correspondant comprenant au moins une fente (18) permettant sa déformation élastique temporaire, ledit capuchon comprenant en outre au moins une butée interne (19) coopérant avec ladite protubérance pour réaliser l'emboîtement dudit doigt dans ledit capuchon.

5. Tablette (2) de recouvrement d'un compartiment à bagages de véhicule automobile, ladite tablette comprenant deux dispositifs (1) selon l'une quelconque des revendications 1 à 4, lesdits dispositifs étant respectivement disposés selon les coins avant de ladite tablette de façon à permettre un actionnement en rotation de ladite tablette selon son bord avant pour faciliter l'accès aux bagages.

6. Ensemble de montage d'une tablette (2) de recouvrement d'un compartiment à bagages de véhicule automobile, ledit ensemble comprenant un dispositif selon l'une quelconque des revendications 1 à 4 et un moyen réciproque, ledit ensemble présentant les caractéristiques suivantes :
• ledit moyen réciproque est sous forme d'un axe issu dudit compartiment,
• le moyen d'emboitement (20) est sous forme d'un logement (11) prévu sur la plaque (9), ledit logement étant agencé pour recevoir ledit axe, de sorte que ladite tablette puisse être montée en rotation autour dudit axe, ledit logement présentant une ouverture (12), ladite ouverture étant agrandissable par déformation élastique depuis une configuration rétractée vers une configuration agrandie et étant dimensionnée de manière à permettre une introduction dudit axe dans ledit logement par déformation de ladite ouverture et à maintenir ledit axe dans ledit logement après rappel élastique de ladite ouverture en configuration rétractée.

7. Ensemble selon la revendication 6, **caractérisé en ce que** le rebord (4) est pourvu d'une encoche (7), le logement (11) étant disposé dans un renfoncement (10) de la plaque (9), ladite encoche présentant une géométrie complémentaire à celle dudit renfoncement de sorte que ledit renfoncement soit inséré dans ladite encoche et en contact avec elle.

## Patentansprüche

1. Vorrichtung (1) zur Montage einer Abdeckungsplatte (2) für die Gepäckablage eines Kraftfahrzeugs, wobei die Vorrichtung Folgendes umfasst:
- einen Plattenvorsprung (4), wobei der Vorsprung eine äußere Seite (5) und eine innere Seite (6) umfasst,
- ein Befestigungsstück (8), umfassend eine Tafel (9), versehen mit einem Einschubmittel (20), das dazu ausgelegt ist, um mit einem reziproken Mittel aus der Ablage zusammenzuarbeiten, wobei die Mittel derart angeordnet sind, dass die Platte in Drehung mit Bezug auf die Ablage montiert werden kann, wobei die Tafel gegen die äußere Seite befestigt ist,
wobei die Vorrichtung **dadurch gekennzeichnet ist, dass** die Tafel mit mindestens einem Befestigungsfinger (13) ausgestattet ist, wobei der Finger eine Öffnung (14) durchquert, die in dem Vorsprung vorgesehen ist, wobei die Vorrichtung außerdem eine Sicherungskappe (15) umfasst, wobei die Kappe auf den Finger geschoben ist, indem sie gegen die innere Seite gedrückt ist.

2. Vorrichtung nach Anspruch 1, **dadurch gekennzeichnet, dass** das Stück (8) auf geformtem Kunststoffmaterial basiert, wobei die Kappe (15) aus einem Stück mit der Tafel (9) mit Hilfe einer verformbaren Lasche (16) geformt ist.

3. Vorrichtung nach Anspruch 1 oder 2, **dadurch gekennzeichnet, dass** die Platte (9) zwei Befestigungsfinger (13) umfasst, die auf beiden Seiten des Einschubmittels (20) angebracht sind, wobei zwei entsprechende Kappen (15) auf die Finger geschoben sind.

4. Vorrichtung nach einem der Ansprüche 1 bis 3, **dadurch gekennzeichnet, dass** mindestens ein Finger (13) ein freies Ende umfasst, das mit einem Absatz (17) ausgestattet ist, wobei die entsprechende Kappe (15) mindestens einen Spalt (18) umfasst, der seine vorübergehende elastische Verformung ermöglicht, wobei die Kappe außerdem mindestens einen inneren Anschlag (19) umfasst, der mit dem Absatz zusammenarbeitet, um den Einschub des Fingers in die Kappe durchzuführen.

5. Platte (2) zur Abdeckung einer Gepäckablage eines Kraftfahrzeugs, wobei die Platte zwei Vorrichtungen (1) nach einem der Ansprüche 1 bis 4 umfasst, wobei die Vorrichtungen jeweils an den Ecken vor der Platte angeordnet sind, um eine Betätigung in Drehung der Platte an ihrem vorderen Rand zu ermöglichen, um den Zugang zu den Gepäckstücken zu erleichtern.

6. Montageeinheit einer Platte (2) zur Abdeckung einer Gepäckablage eines Kraftfahrzeugs, wobei die Einheit eine Vorrichtung nach einem der Ansprüche 1 bis 4 und ein reziprokes Mittel umfasst, wobei die Einheit die folgenden Eigenschaften aufweist:
- das reziproke Mittel weist die Form einer Achse auf, die sich aus der Ablage erstreckt,
- das Einschubmittel (20) weist die Form einer Aufnahme (11) auf, die auf der Tafel (9) vorgesehen ist, wobei die Aufnahme angeordnet ist, um die Achse aufzunehmen, so dass die Platte in Drehung um die Achse montiert werden kann, wobei die Aufnahme eine Öffnung (12) aufweist, wobei die Öffnung durch elastische Verformung aus einer zurückgezogenen Konfiguration in eine vergrößerte Konfiguration vergrößert werden kann, und abgemessen ist, um eine Einführung der Achse in die Aufnahme durch die Verformung der Öffnung zu ermöglichen und die Achse nach der elastischen Rückstellung der Öffnung in die zurückgezogene Konfiguration in der Aufnahme zu halten.

7. Einheit nach Anspruch 6, **dadurch gekennzeichnet, dass** der Vorsprung (4) mit einem Schlitz (7) ausgestattet ist, wobei die Aufnahme (11) in einem Rücksprung (10) der Tafel (9) angeordnet ist, wobei der Schlitz eine komplementäre Geometrie zur derjenigen des Rücksprungs aufweist, so dass der Rücksprung in den Schlitz und in Kontakt mit diesem eingeführt ist.

## Claims

1. Device (1) for mounting a shelf (2) for covering a luggage compartment of a motor vehicle, said device comprising:
- an edge (4) of the shelf, said edge comprising an outer face (5) and an inner face (6),
- a part (8) for fastening comprising a plate (9) provided with a means of interlocking (20) intended to cooperate with reciprocal means coming from said compartment, said means being arranged in such a way that said shelf can be mounted in rotation in relation to said compartment, said plate being fastened against said outer face,
said device being **characterised in that** said plate is provided with at least one finger (13) for fastening, said finger passing through an orifice (14) provided in said edge, said device further comprising a cap (15) for securing, said cap being interlocked on said finger by being thrust against said inner face.

2. Device according to claim 1, **characterised in that** the part (8) is made from a moulded plastic material, with the cap (15) being moulded in one piece with the plate (9) by the intermediary of a deformable tab (16).

3. Device according to claim 1 or 2, **characterised in that** the plate (9) comprises two fingers (13) for fastening arranged on either side of the means of interlocking (20), two corresponding caps (15) being interlocked on said fingers.

4. Device according to any of claims 1 to 3, **characterised in that** at least one finger (13) comprises a free end provided with a protuberance (17), with the corresponding cap (15) comprising at least one slot (18) allowing for temporary elastic deformation thereof, said cap further comprising at least one internal stop (19) cooperating with said protuberance in order to carry out the interlocking of said finger in said cap.

5. Shelf (2) for covering a luggage compartment of a motor vehicle, said shelf comprising two devices (1) according to any of claims 1 to 4, said devices being respectively arranged according to the front corners of said shelf in such a way as to allow an actuation in rotation of said shelf according to its front edge in order to facilitate the access to the luggage.

6. Assembly for mounting a shelf (2) for covering a luggage compartment of a motor vehicle, said assembly comprising a device according to any of claims 1 to 4 and a reciprocal means, said assembly having the following characteristics:
- said reciprocal means is in the form of an axis coming from said compartment,
- the means of interlocking (20) is in the form of a housing (11) provided on the plate (9), said housing being arranged to receive said axis, in such a way that said shelf can be mounted in rotation around said axis, said housing having an opening (12), said opening able to be expanded by elastic deformation from a retracted configuration to an expanded configuration and being dimensioned so as to allow the introduction of said axis into said housing by deformation of said opening and holding said axis in said housing after elastic return of said opening in the retracted configuration.

7. Assembly according to claim 6, **characterised in that** the edge (4) is provided with a notch (7), with the housing (11) being arranged in a recess (10) of the plate (9), said notch having a geometry complementary to that of said recess in such a way that said recess is inserted into said notch and in contact with it.
